# NOUVEAU FASCICULE DE BREVET EUROPEEN

(11) **EP 2 446 147 B2**
(45) Date de publication et mention de la décision concernant l'opposition: **07.09.2022**
(45) Mention de la délivrance du brevet: 10.02.2016
(21) Numéro de dépôt: 10726098.6
(22) Date de dépôt: 24.06.2010
(51) Int. Cl.: F04D 19/04, F04D 27/00, F04B 37/14, F04B 51/00, F04C 25/02, G05B 19/4065, G05B 23/02, G06F 11/00, F04C 28/28, G01H 1/00

(54) **PROCEDE DE PREDICTION D'UNE DEFAILLANCE DE LA ROTATION DU ROTOR D'UNE POMPE A VIDE ET DISPOSITIF DE POMPAGE ASSOCIE**
VERFAHREN ZUR VORHERSAGE EINES DREHDEFEKTES BEIM ROTOR EINER VAKUUMPUMPE UND ZUGEHÖRIGE PUMPVORRICHTUNG
METHOD FOR PREDICTING A ROTATION FAULT IN THE ROTOR OF A VACUUM PUMP, AND ASSOCIATED PUMPING DEVICE

(30) Priorité: 26.06.2009 FR 0903125
(43) Date de publication de la demande: 02.05.2012
(73) Titulaire: Pfeiffer Vacuum, 74000 Annecy (FR)
(72) Inventeur: BECOURT, Nicolas, F-74009 Annecy (FR); MARTIN, Florent, F-74009 Annecy (FR); PARISET, Cécile, F-74009 Annecy (FR); GALICHET, Sylvie, F-74600 Seynod (FR); MEGER, Nicolas, F-73100 Gresy/Aix (FR)
(74) Mandataire: Croonenbroek, Thomas Jakob
(86) Numéro de dépôt international: PCT/EP2010/058994
(87) Numéro de publication internationale: WO 2010/149738

(56) Documents cités:
- EP-A1- 0 632 353
- WO-A1-2004/011810
- WO-A2-2005/038613
- US-A- 5 210 704
- US-A1- 2002 138 217
- US-A1- 2004 143 418
- US-A1- 2008 059 120
- Wikipedia-contributors: "Association rule learning" Wikipedia 22 juin 2009 (2009-06-22), XP002597762 Extrait de l'Internet: URL:http://en.wikipedia.org/w/index.php?ti tle=Association_rule_learning&oldid=297937 701 [extrait le 2010-08-24]
- HAN H K ET AL: "Sequential association rules for forecasting failure patterns of aircrafts in Korean airforce" EXPERT SYSTEMS WITH APPLICATIONS, OXFORD, GB, vol. 36, no. 2, 1 mars 2009 (2009-03-01), pages 1129-1133, XP025680630 ISSN: 0957-4174 [extrait le 2007-11-07]
- "Data Collection and Networking Capabilities Enable Pump Predictive Diagnostics", published in Solid State Technology, Volume 48, Issue 7, 1st July 2005 - A

## Description

La présente invention se rapporte au domaine de la maintenance prédictive et préventive d'une pompe à vide associée à une chambre de procédés. Elle concerne plus particulièrement le suivi des signaux de capteurs provenant de la pompe à vide et permettant de prédire une défaillance par grippage de la pompe afin de pouvoir programmer des interventions de maintenance préventive. L'invention s'étend en outre au dispositif de pompage associé.

Les pompes à vide comportent généralement un ou plusieurs rotors qui, en fonctionnement sont entraînés par un moteur pour tourner dans le corps de pompe (stator). Lors de la rotation, le gaz aspiré de la chambre de procédés est emprisonné dans l'espace libre compris entre le rotor et le stator, pour être refoulé vers la sortie.

Les pompes à vide sont notamment employées dans les procédés de fabrication de semi-conducteurs, d'écrans plats ou de substrats photovoltaïques, nécessitant une pression inférieure à la pression atmosphérique. Or les gaz mis en œuvre dans ces procédés peuvent se transformer en sous-produits solides qui peuvent se déposer sous la forme d'une couche sur les pièces mobiles et statiques de la pompe, et conduire au colmatage puis au grippage de la pompe pouvant provoquer le blocage du mécanisme dû à un frottement excessif du rotor avec le stator.

D'autres sources peuvent être à l'origine du grippage de la pompe à vide. Par exemple, un grippage de source thermique peut survenir suite à la déformation du rotor sous l'effet de son échauffement. De même, un défaut de balourd ou d'alignement du rotor en cours de montage ou de fabrication de la pompe à vide peut conduire au déséquilibre du rotor et au grippage de la pompe à vide. Egalement, lorsque la pompe à vide possède des roulements, la dégradation de ceux-ci peut être également une source de grippage du ou des rotors dans le stator.

Le grippage de la pompe peut entraîner des dommages irrémédiables au niveau du produit en cours de fabrication dans la chambre de procédés associée (par exemple une plaquette de semi-conducteur), mais également au niveau de la pompe à vide. Il est alors inévitable d'interrompre le déroulement du procédé de traitement dans la chambre pour procéder au remplacement de la pompe à vide. Les coûts induits par ces interruptions non programmées de la production sont considérables.

Aujourd'hui la maintenance des pompes à vide est basée à la fois sur des actions correctives et préventives, la meilleure situation étant de pouvoir prédire une maintenance préventive avant que la pompe à vide ne tombe en panne et ne s'arrête.

Pour cela, des opérations de maintenance préventive sont effectuées selon une périodicité définie en fonction de l'application pour laquelle est utilisée la pompe à vide. Cependant la périodicité n'est pas adaptée aux conditions réelles d'utilisation de la pompe qui peuvent varier en fonction de la charge de production et qui peuvent impacter directement la vitesse d'usure ou de colmatage de la pompe, engendrant des opérations inutiles ou bien trop tardives.

Des procédés de prédiction de défaillance de pompe à vide ont alors été développés pour essayer de prédire la survenue du grippage de la pompe et anticiper son remplacement.

Le document US2004/143418A1 divulgue par exemple un procédé de prédiction de défaillance permettant la détermination du délai dans lequel survient une défaillance sur une pompe à vide sèche. L'estimation de la durée d'utilisation de la pompe à vide avant la survenue d'une défaillance s'effectue par exploitation statistique des données caractéristiques de la pompe (courant, température, vibrations, ...) combinées aux caractéristiques du procédé de fabrication (flux de gaz, pression, température du substrat, ...). Toutefois, ce procédé n'est pas autonome. Il ne peut pas prédire la durée de vie de la pompe sans tenir compte des conditions opératoires du procédé. Le système d'analyse dépend d'informations fournies par l'équipement de production nécessitant l'installation d'une ligne de communication entre l'équipement et la pompe à vide. De plus, une modification des conditions de procédé nécessite alors la modification du modèle du système d'analyse, ce qui ne peut pas être réalisé simplement en cours d'utilisation des pompes à vide.

On connaît également du document EP 1 754 888, un procédé de prédiction de défaillance d'une ligne de vide. Dans ce procédé, on mesure l'évolution temporelle d'un premier paramètre fonctionnel relatif au moteur de la pompe et d'un deuxième paramètre fonctionnel relatif au système d'évacuation des gaz de la pompe. Les paramètres fonctionnels mesurés sont ensuite corrélés par un traitement statistique de manière à prédire la durée d'utilisation de la pompe à vide avant la survenue d'un colmatage. La ligne de vide est ainsi capable de réaliser un autodiagnostic sans corrélation avec des signaux extérieurs. Cette méthode est particulièrement bien adaptée au suivi de la progression du phénomène de pollution par des produits solides dans la ligne de vide conduisant au colmatage de la pompe. Toutefois, la prévision du comportement anormal de la pompe à vide en cas de grippage par colmatage ne survient que peu de temps avant la défaillance. Il n'est alors pas toujours possible d'intervenir avant l'arrêt de la pompe à vide. En outre, ce procédé ne permet pas la prédiction d'autres dysfonctionnements par grippage de la pompe, comme celui ayant pour origine un échauffement thermique ou un défaut de fabrication ou de montage.

Le problème est donc de prédire la survenue d'une défaillance par grippage de la pompe à vide afin de programmer une maintenance préventive dans le but d'éviter que la pompe ne tombe en panne alors qu'elle est en cours d'utilisation.

Le problème est également d'identifier un comportement anormal de la pompe à vide sans aucune indication du procédé de traitement ayant lieu dans la chambre de procédés. La prédiction de défaillance doit pouvoir être réalisée indépendamment de la connaissance des conditions d'utilisation de la pompe à vide, liées notamment aux différents flux de gaz pompés, à la nature des gaz pompés, aux durées d'utilisation, autrement dit sans considération des conditions et paramètres particuliers autres que ceux provenant de la pompe à vide.

De plus, la prédiction doit être fiable. Autrement dit, la prédiction de défaillance doit être susceptible de se produire avec un degré de confiance suffisant pour prédire les défaillances dans plus de 50% des cas, voire dans plus de 80% des cas. Egalement, la prédiction doit intervenir suffisamment tôt pour permettre la programmation d'une maintenance préventive.

A cet effet, l'invention a pour objet un procédé de prédiction d'une défaillance de la rotation du rotor d'une pompe à vide comprenant les étapes selon la revendication 1.

Selon une caractéristique du procédé de prédiction,
- on extrait une ou plusieurs règles d'association sur N-1 séquences d'événements de la base de données d'apprentissage, relevées sur N pompes à vide et on valide lesdites règles d'association sur la séquence d'événements qui n'a pas servi à l'extraction.

L'invention a aussi pour objet un dispositif de pompage comportant :
- une pompe à vide comprenant au moins un rotor et un corps de pompe, ledit rotor étant susceptible d'être entraîné en rotation dans ledit corps de pompe par un moteur de ladite pompe,
- un capteur de signaux fonctionnels de ladite pompe, et
- un moyen de prédiction d'une fenêtre prédictive de temps au cours de laquelle une défaillance de la rotation du rotor va survenir sur la pompe à vide, ledit moyen de prédiction étant configuré pour mettre en œuvre un procédé de prédiction d'une défaillance de la rotation du rotor d'une pompe à vide selon l'une quelconque des revendications 1 ou 2 pour calculer la fenêtre prédictive de temps à partir des mesures fournies par ledit capteur de signaux fonctionnels.

Selon un premier mode de réalisation du dispositif de pompage, le capteur de signaux fonctionnels est un capteur de vibrations, par exemple fixé au niveau d'un palier dudit corps de pompe.

Selon un deuxième mode de réalisation du dispositif de pompage, le capteur de signaux fonctionnels est un moyen de mesure du courant du moteur de la pompe à vide.

L'utilisation d'un dispositif de pompage comprenant un moyen de prédiction pouvant fournir un diagnostic permet, en les prévoyant, d'éviter les défaillances majeures lorsque l'installation dont fait partie la pompe à vide est dans une phase de production active.

D'autres avantages et caractéristiques apparaîtront à la lecture de la description suivante d'un mode de réalisation particulier de l'invention, mais nullement limitatif, ainsi que des dessins annexés sur lesquels :
- la figure 1 représente une vue schématique d'une installation comprenant une chambre de procédés reliée à un dispositif de pompage,
- la figure 2 représente un diagramme du procédé de prédiction de défaillance,
- la figure 3 montre un graphique représentant des signaux de vibrations sur plusieurs bandes de fréquences de vibrations en fonction du temps pour un exemple de séquence d'événements,
- la figure 4 représente de manière symbolique un autre exemple d'une séquence d'événements,
- la figure 5 représente un graphique du pourcentage de confiance en fonction de la taille de la fenêtre optimale, et
- la figure 6 illustre un graphique d'un exemple de séquence d'événements en fonction du temps et d'une fenêtre prédictive de temps associée.

Sur ces figures, les éléments identiques portent les mêmes numéros de référence.

Par souci de clarté, les étapes du procédé sont numérotées à partir de 100.

L'invention s'applique à tout type de pompe à vide comprenant un rotor entraîné en rotation dans un stator du corps de pompe. La pompe à vide est par exemple à lobes rotatifs, telle qu'une pompe à vide de type « Roots », à deux ou trois lobes. Dans les pompes à vide de type « Roots », chaque étage de pompe comporte deux rotors de profils identiques, tournant à l'intérieur du stator, en sens opposé. Lors de la rotation, le gaz aspiré est emprisonné dans l'espace libre compris entre les rotors et le stator, puis il est refoulé par l'échappement vers la sortie ou vers l'étage suivant. La pompe à vide à lobes rotatif peut également être une pompe à vide à double bec, également connues sous le nom « Claw ». En outre, la pompe à vide peut aussi être moléculaire, turbomoléculaire ou hybride ou encore une pompe à palettes ou une pompe à vide de type « vis ».

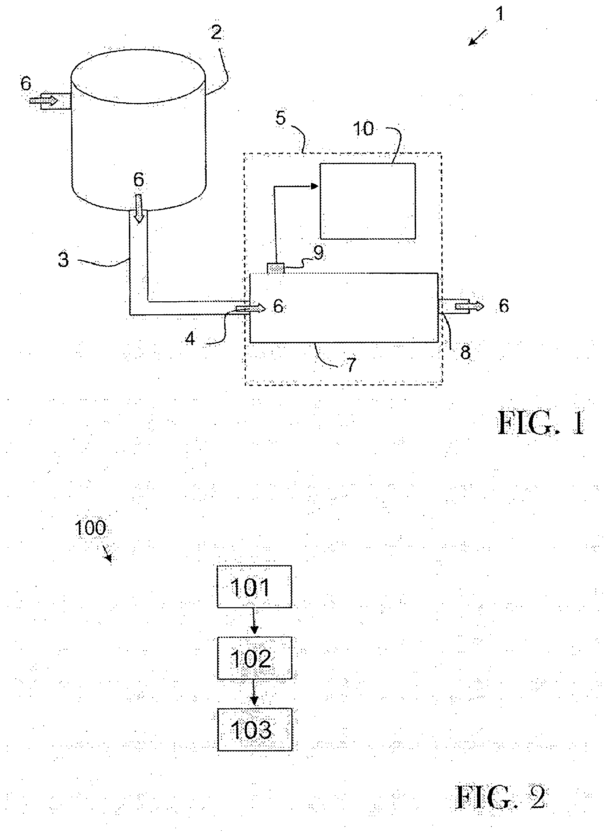

L'installation 1 représentée sur la figure 1 comporte une chambre de procédés 2 reliée par une canalisation 3 à l'aspiration 4 d'un dispositif de pompage 5 pour le pompage des gaz issus de la chambre 2, selon le sens d'écoulement représenté par les flèches 6. Il peut s'agir d'une chambre 2 dans laquelle a lieu n'importe quel procédé de traitement, par exemple des procédés de dépôts, gravure, implantation ionique ou traitement thermique utilisés dans la fabrication de dispositifs microélectronique sur des plaquettes de silicium ou encore des procédés de fabrication d'écrans plats ou de substrats photovoltaïques.

Le dispositif de pompage 5 comporte une pompe à vide 7 présentant un corps de pompe à l'intérieur duquel un rotor est susceptible d'être entraîné en rotation par un moteur de la pompe 7 (non représentés). En fonctionnement, la vitesse de rotation du rotor est régulée à une valeur fixe. La sortie 8 de la pompe à vide 7 est mise en relation avec une canalisation d'évacuation.

Le dispositif de pompage 5 comporte en outre un capteur de vibrations 9 du corps de pompe et un moyen de prédiction 10 d'une fenêtre prédictive de temps au cours de laquelle une défaillance par grippage va survenir sur la pompe 7. On définit le grippage comme une défaillance du mouvement de rotation du rotor dans le corps de pompe, pouvant entraîner le blocage du mécanisme de rotation.

Le capteur de vibrations 9, est par exemple un accéléromètre piézoélectrique permettant de fournir des vitesses vibratoires efficaces (en m/s). La sortie du capteur de vibrations 9 est reliée au moyen de prédiction 10.

L'analyse des vibrations permet d'identifier des phénomènes périodiques caractéristiques nécessaires pour la prédiction du grippage de la pompe à vide tournant à vitesse fixe. Etant donné la structure rigide du corps de pompe, un seul capteur de vibrations 9 peut suffire pour collecter tous les phénomènes vibratoires caractéristiques du corps de pompe en seul point de mesure. La sortie analogique du capteur de vibrations 9 est transformée par transformée de Fourier en un spectre afin d'identifier des phénomènes périodiques.

Le capteur de vibrations 9 est par exemple fixé au niveau d'un des deux paliers de la pompe à vide 7, car c'est là que sont transmis les efforts des rotors au corps de pompe. Plus précisément, dans l'exemple de la pompe à vide sèche de type Roots, on dispose le capteur de vibrations verticalement sur la face supérieure du corps de pompe sensiblement entre les deux rotors où les efforts de compression induits par les arbres des rotors sur le corps de pompe, sont les plus importants.

Le moyen de prédiction 10 calcule la fenêtre prédictive de temps au cours de laquelle une défaillance par grippage va survenir sur la pompe à vide 7, à partir de mesure de l'évolution temporelle des signaux de vibrations fournis par le capteur de vibrations 9. Le moyen de prédiction 10 comporte une unité de traitement localisée au niveau de la pompe à vide 7 ou délocalisée dans un centre expert dédié. L'unité de traitement renvoie par exemple l'information de prédiction à un serveur de supervision des pompes. Le serveur peut alors à son tour envoyer un message au dispositif de surveillance de l'opérateur de maintenance.

Pour calculer la fenêtre prédictive de temps au cours de laquelle une défaillance par grippage va survenir, le moyen de prédiction 10 met en œuvre le procédé de prédiction de défaillance 100 illustré en figure 2.

Dans une première étape 101 du procédé de prédiction 100, on enregistre des séquences d'événements relatives à l'évolution temporelle des signaux de vibrations du corps de pompe à partir de mesure effectuées par exemple toutes les 80 secondes.

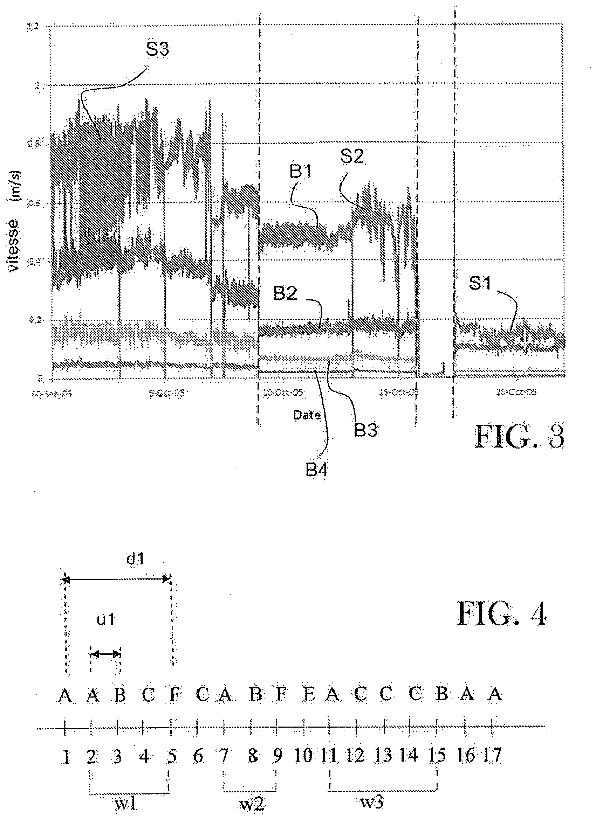

Pour réduire la taille de la base de données d'apprentissage, on sélectionne dans le spectre de vibrations, des bandes de fréquence de vibrations autour de fréquences caractéristiques de la cinématique de la pompe à vide. La figure 3 représente des signaux de vibrations (en vitesse) pour quatre bandes de fréquence de vibrations B1, B2, B3 et B4.

On sélectionne par exemple une bande de fréquence de vibrations centrée autour de la fréquence caractéristique correspondant à la vitesse de rotation du rotor.

On peut également prévoir de sélectionner une bande de fréquence de vibrations autour de la fréquence caractéristique correspondante à la géométrie des parties mécaniques en rotation (telles que les arbres, les lobes, les roulements, les engrenages).

On peut encore sélectionner une bande de fréquence de vibrations autour d'une ou plusieurs harmoniques de la fréquence de rotation de la pompe, caractéristique par exemple d'un déséquilibre du rotor ou d'un désalignement des arbres du rotor.

Les séquences d'événements sont caractérisées d'une part, par des niveaux des signaux de vibrations sélectionnés parmi les bandes de fréquences et d'autre part, par des durées caractéristiques passées auxdits niveaux de vibrations.

On mesure par exemple des séquences d'événements sur quatre durées caractéristiques: 2 heures, 2 jours, 1 semaine et plus d'une semaine.

On détermine par exemple un niveau de référence et des niveaux de fonctionnement intermédiaires. Les niveaux sont par exemple déterminés en faisant la moyenne de l'enveloppe des signaux sur une durée prédéterminée.

Trois exemples de niveau de bandes de fréquence S1, S2, S3 des signaux de vibrations issus du capteur de vibrations sont représentés sur la courbe B1 de la figure 3.

Le niveau de référence S1 correspond au seuil bas des signaux de vibrations évalué sur une durée caractéristique de l'ordre de 24 heures, par exemple afin de s'affranchir de perturbations ponctuelles liées par exemple au procédé de traitement en cours.

La mesure du niveau de référence S1 démarre au moins 24 heures après le démarrage d'une pompe à vide neuve afin de s'affranchir de la période de rodage de la pompe à vide 7 durant laquelle les niveaux de vibrations ne sont pas encore stabilisés.

Le premier niveau de fonctionnement intermédiaire S3 correspondant au seuil haut des signaux de vibrations est par exemple de l'ordre de quatre fois le niveau de référence S1 (voir figure 3). Il est par exemple mesuré sur une durée caractéristique de l'ordre de 2 heures. Cette durée permet de s'affranchir d'autres perturbations ponctuelles liées par exemple au procédé de traitement en cours (de l'ordre de quelques minutes).

Le deuxième niveau de fonctionnement intermédiaire S2 correspond à trois fois le niveau de référence S1 et il est par exemple mesuré sur une durée caractéristique de l'ordre de 2 heures.

Un premier niveau de fonctionnement intermédiaire S3 observé pendant une semaine suivi d'un deuxième niveau intermédiaire S2 observé pendant deux jours, correspond par exemple à l'événement F de grippage de la pompe à vide.

Dans une deuxième étape 102 du procédé de prédiction 100, on recherche une correspondance entre au moins une succession d'événements et au moins un motif précurseur de règle d'association préétablie d'un modèle de comportement de la pompe à vide dans les séquences d'événements enregistrées, les règles d'association étant établies par extraction de connaissance sous la contrainte d'un ou de plusieurs paramètres d'extraction.

Les règles d'association sont de la forme : « si motif précurseur alors résultat ». Elles impliquent une défaillance de la rotation du rotor. Elles sont notées selon la formule (1) :
(1) : α=>F
   dans laquelle :
   - «α» est le motif précurseur comprenant une séquence d'événements A, B, C ..., chaque événement étant espacé temporellement d'une durée maximum préétablie et imposée par la durée maximum entre le dernier événement du motif précurseur et l'événement de grippage. La durée maximum entre évènement est fixée par exemple à 10 jours. La séquence d'événements du motif précurseur est notée selon la formule (2),
(2) : A -> B,
   Où A est le premier événement suivi de B, le deuxième événement ;
   - « F» est le résultat de défaillance de la rotation du rotor, c'est l'événement de grippage «F », et
   - « = > » est un opérateur d'implication entre le motif précurseur et le résultat.

Selon un mode de réalisation, on établit les règles d'association décrivant le modèle de comportement de la pompe à vide 7 par extraction de connaissance à partir d'une base de données d'apprentissage.

La méthode d'extraction de connaissance à partir de données (ECD en français, KDD en Anglais), incluant la méthode dite «fouille de données » ou «data mining» en anglais ou exploration de données, a pour objet l'extraction d'un savoir ou d'une connaissance à partir de grandes quantités de données, par des méthodes automatiques ou semi-automatiques. Cette méthode permet d'utiliser les données disponibles dans les bases pour identifier un motif caractéristique, des combinaisons, des structures/arrangements méconnus et significatifs par l'utilisation d'une ou plusieurs règles d'association. Cette méthode est itérative, ce qui permet d'optimiser la qualité des connaissances extraites. De plus, et contrairement à d'autres méthodes, la méthode de fouille des données permet d'obtenir des règles d'association pouvant être interprétées par l'utilisateur.

La base de données d'apprentissage comprend une pluralité de séquences d'événements pertinentes par rapport à la défaillance par grippage, obtenues sur un parc de pompes à vide et sur une durée de vie allant de la mise en fonctionnement de la pompe à vide jusqu'au grippage. On considère un parc de pompes à vide suffisamment important, par exemple de l'ordre d'une soixantaine de pompes, de manière à fiabiliser la pertinence des événements. On utilise de préférence un parc de pompes à vide qui vont être mises en fonctionnement en conditions d'utilisation réelles, de manière à observer sur une durée de vie complète de la pompe à vide, la défaillance que l'on cherche à prédire.

La base de données d'apprentissage ne comporte que les successions d'événements obtenues avant un « premier grippage ». En effet, en condition d'utilisation réelle, lorsqu'un grippage de la pompe à vide est prédit, l'objectif est de remplacer la pompe à vide par une autre pompe neuve. Il est alors inutile d'apprendre sur les grippages postérieurs au premier Par conséquent, pour construire la base de données d'apprentissage, on sélectionne les acquisitions effectuées entre la date de mise en service de la pompe à vide et la date du premier grippage observé sur la pompe. Le premier grippage est par exemple constaté par un expert qui peut s'appuyer notamment des signaux émis par des capteurs intégrés à la pompe à vide et enregistrés en cours de fonctionnement, tels que la puissance consommée par le moteur de la pompe à vide ou la pression des gaz en sortie de la pompe à vide. L'expert peut également s'appuyer sur une expertise de la pompe à vide afin d'identifier clairement la cause du grippage.

La figure 4 représente un exemple d'une séquence d'événements enregistrée pour plusieurs durées de vie de pompes à vide mises bout à bout. La durée de vie d1 représente par exemple une séquence d'événements entre une mise en service et un événement de grippage « F ».

Les règles d'association sont extraites sous la contrainte d'un ou de plusieurs paramètres d'extraction choisi parmi : le support, la confiance et la durée maximum entre chaque événement de la règle d'association.

Le support correspond au nombre de fois que la règle d'association a prédit une défaillance par grippage. On choisit un support au moins égal à 1, c'est-à-dire qu'une règle d'association doit avoir au moins une occurrence de 1 dans la détection des défaillances par grippage dans la base de données d'apprentissage. On peut choisir un support égal à 2 pour que les règles d'association extraites ne soient pas trop spécifiques.

La confiance est une mesure de fiabilité de la règle d'association. Elle exprimée en % de prédiction de l'événement de grippage F. On choisit une confiance de 100%. Autrement dit, le motif précurseur doit toujours être suivi du résultat de grippage afin d'éviter des fausses prédictions, même si ce choix tend à faire diminuer le taux de prédiction. Une règle d'association pour laquelle on obtiendrait par exemple un événement de grippage neuf fois sur dix, serait rejetée.

La durée maximum entre chaque événement de la règle d'association est une contrainte imposée par l'horizon de prédiction, c'est-à-dire par la durée maximale entre la prédiction de défaillance et la survenue de la défaillance proprement dite. On détermine une durée maximum entre chaque événement de l'ordre de 10 jours.

A l'issu de l'apprentissage, les règles d'association sont caractérisées par une fenêtre optimale, issue du calcul, pour chaque règle d'association. La fenêtre optimale est la durée de la règle permettant d'obtenir la plus grande confiance. Pour chaque règle d'association, on retiendra la fenêtre optimale pour laquelle le support est égal à 1 et la confiance est de 100%.

Par exemple, pour l'exemple de séquence d'événements de la figure 4, pour une fenêtre maximum w1 de durée égale à 3 unités de temps u1, le motif précurseur A->B a lieu deux fois. En outre, à chaque fois, ce motif précurseur a impliqué l'événement de grippage F. La confiance est donc de 100%.

Pour une fenêtre maximum w2 de durée égale à deux unités de temps u1, le motif précurseur A->B a lieu deux fois. Ce motif précurseur a impliqué l'événement de grippage F une fois sur deux. La confiance est donc de 50%.

Pour une fenêtre maximum w3 de durée égale à quatre unités de temps u1, le motif précurseur A->B a lieu trois fois. Toutefois, ce motif précurseur a impliqué l'événement de grippage F seulement deux fois sur trois. La confiance est donc de 66%.

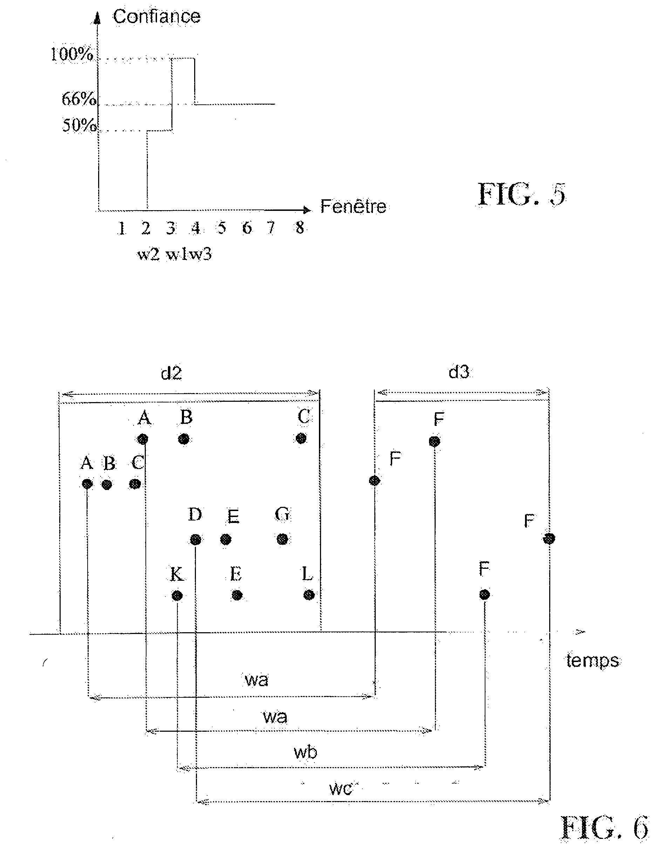

Le graphique de la figure 5 résume ces trois possibilités en représentant le pourcentage de confiance en fonction de la durée de la fenêtre. On constate que pour une fenêtre w1 de durée de 3 unités, la confiance est maximum tandis que pour une fenêtre w2, w3 de durée inférieure ou supérieure, la confiance est moindre. Autrement dit, il existe une fenêtre optimale w1 pour laquelle la confiance est maximum.

On extrait alors une ou plusieurs règles d'association (en général un jeu de règles d'association) sur N-1 séquences d'événements de la base de données d'apprentissage relevées sur N pompes à vide et on valide les règles d'association sur la séquence d'événement qui n'a pas servi à l'extraction.

Cette démarche permet de tester la robustesse des règles d'association établies. Une règle d'association valide doit permettre de prédire ou non un dysfonctionnement sur l'ensemble des séquences d'événements restants qui n'a pas servi à l'établissement de la règle d'association, satisfaisant les mêmes contraintes que lors de l'extraction. Cette méthode permet de construire des modèles de comportement le plus générique possible et de vérifier le fonctionnement de la méthode sur une séquence d'événements indépendante (encore non utilisée).

Cette méthode est réitérée ensuite N fois pour déterminer d'autres règles d'association ou bien retrouver des mêmes règles d'association, en laissant à chaque fois un nouvel ensemble non utilisé pour la validation de la nouvelle règle d'association. Chaque séquence est alors successivement isolée des N-1 séquences d'événements servant à l'établissement d'une règle d'association pour valider ladite règle d'association. L'ensemble des règles d'association extraites au cours des N extractions compose alors un jeu de règles d'association.

Au cours d'une troisième étape 103 du procédé d'extraction 100, on en déduit une fenêtre prédictive de temps au cours de laquelle une défaillance de la rotation du rotor va survenir sur la pompe à vide 7. Pour toute occurrence d'un motif précurseur, on pronostique ainsi la date de la défaillance par ajout de la taille de fenêtre optimale à la date d'apparition du premier événement de la règle d'association.

Pour une fenêtre d'observation d2, la fenêtre prédictive de temps d3 est égale à l'intervalle de temps compris entre la prédiction de date de défaillance la plus proche et la prédiction de date de défaillance la plus éloignée.

La fenêtre d'observation d2 est imposée par la règle comportant le plus grand nombre d'événements (k) et est égale à (k-1) fois la durée maximum entre chaque événement.

Les règles établies par extraction de connaissance à partir de la base de données d'apprentissage sont par exemple (R1), (R2), et (R3):

| | |
|---|---|
| (R1) | A->B->C=>F, avec une première fenêtre optimale wa |
| (R2) | D->E->G=>F, avec une deuxième fenêtre optimale wc |
| (R3) | K->E->L=>F, avec une troisième fenêtre optimale wb. |

La figure 6 illustre une séquence d'événements mesurée au cours du temps pendant la fenêtre d'observation d2.

L'occurrence du motif précurseur A->B->C permet de pronostiquer un grippage F qui aura lieu à la date d'apparition du premier événement A, plus la taille de la fenêtre optimale wa. Ce motif précurseur est apparu deux fois au cours de la fenêtre d2, deux dates sont donc pronostiquées pour la survenue du grippage.

L'occurrence du motif précurseur D->E->G permet de pronostiquer un grippage F qui aura lieu à la date d'apparition du premier événement D, plus la taille de la fenêtre optimale wc.

L'occurrence du motif précurseur K->E->L permet de pronostiquer un grippage F qui aura lieu à la date d'apparition du premier événement K, plus la taille de la fenêtre optimale wb.

Le nuage de points correspondant aux différentes hypothèses de prédiction de la survenue d'un grippage est compris dans la fenêtre prédictive de temps d3 comprise entre la projection selon la fenêtre optimale wc de la règle D->E->G et la projection selon la fenêtre optimale wa de la première occurrence de la règle A->B->C On peut alors prédire une fenêtre temporelle au cours de laquelle une défaillance de la rotation du rotor va survenir sur la pompe à vide.

Le procédé de prédiction permet donc d'identifier un comportement anormal de la pompe à vide d'une part, sans aucune indication du procédé de traitement ayant lieu dans la chambre de procédés et d'autre part, sans être impacté par des perturbations ou modifications du procédé de traitement. Le modèle de comportement de la machine n'a pas besoin d'être réajusté en fonction du déroulement du procédé de traitement.

En outre, la prédiction est fiable dans plus de 80% des cas. Il est alors possible de programmer une maintenance préventive anticipant la défaillance de la pompe avant que celle-ci ne tombe en panne alors qu'elle est en cours d'utilisation. Le diagnostic est précoce, ce qui permet de minimiser les dommages liés à la détérioration des composants et de faciliter le travail de surveillance des opérateurs de maintenance, donc de diminuer encore le coût de la maintenance.

## Revendications

1. Procédé de prédiction d'une défaillance de la rotation du rotor d'une pompe à vide comprenant les étapes suivantes :
- on enregistre des séquences d'événements relatives à l'évolution temporelle de signaux fonctionnels de la pompe à vide (101), on enregistre des séquences d'événements relatives à l'évolution temporelle des signaux de vibrations du corps de pompe de la pompe à vide (101), on transforme les signaux fonctionnels en spectre de fréquence et on sélectionne des bandes de fréquence autour de fréquences caractéristiques de la cinématique de la pompe à vide dans ledit spectre, on établit les règles d'association décrivant le modèle de comportement de la pompe à vide par extraction de connaissance à partir d'une base de données d'apprentissage comprenant une pluralité de séquences d'événements, obtenue sur un parc de pompes à vide et sur une durée de vie des pompes à vide allant de la mise en fonctionnement jusqu'à la défaillance de la rotation du rotor,
- on recherche une correspondance entre au moins une succession d'événements et au moins un motif précurseur de règle d'association préétablie d'un modèle de comportement de la pompe à vide dans les séquences d'événements enregistrées, lesdits motifs précurseurs de règles d'association préétablies impliquant une défaillance de la rotation du rotor (102), et
- on en déduit une fenêtre prédictive de temps au cours de laquelle une défaillance de la rotation du rotor va survenir sur la pompe à vide (103),
le procédé étant **caractérisé par le fait que** lesdites règles d'association sont établies par extraction de connaissance sous la contrainte des paramètres d'extraction que sont le support, la confiance et la durée maximum entre chaque événement de la règle d'association,
à partir de la base de données d'apprentissage, on détermine une séquence d'événements d'une part, par la sélection parmi lesdites bandes de fréquences, d'un niveau de référence et de niveaux de fonctionnement intermédiaires, correspondants à un multiple du niveau de référence, et caractéristiques du fonctionnement de la pompe à vide, et d'autre part, par une durée caractéristiques desdits niveaux.

2. Procédé de prédiction selon la revendication 1, dans lequel on extrait une ou plusieurs règles d'association sur N-1 séquences d'événements de la base de données d'apprentissage relevées sur N pompes à vide et on valide lesdites règles d'association sur la séquence d'événements qui n'a pas servi à l'extraction.

3. Dispositif de pompage comportant :
- une pompe à vide (7) comprenant au moins un rotor et un corps de pompe, ledit rotor étant susceptible d'être entraîné en rotation dans ledit corps de pompe par un moteur de ladite pompe (7),
- un capteur de signaux fonctionnels (9) de ladite pompe (7), et
- un moyen de prédiction (10) d'une fenêtre prédictive de temps au cours de laquelle une défaillance de la rotation du rotor va survenir sur la pompe à vide (7), ledit moyen de prédiction (10) étant configuré pour mettre en œuvre un procédé de prédiction d'une défaillance de la rotation du rotor d'une pompe à vide selon l'une des revendications 1 à 2 pour calculer la fenêtre prédictive de temps à partir des mesures fournies par ledit capteur de signaux fonctionnels (9).

4. Dispositif de pompage selon la revendication précédente, dans lequel ledit capteur de signaux fonctionnels (9) est un capteur de vibrations fixé au niveau d'un palier dudit corps de pompe.

## Patentansprüche

1. Verfahren zur Vorhersage eines Drehdefektes beim Rotor einer Vakuumpumpe, umfassend die folgenden Schritte:
- es werden Ereignissequenzen in Bezug auf den zeitlichen Verlauf von Funktionssignalen der Vakuumpumpe (101) aufgezeichnet,
- es werden Ereignissequenzen in Bezug auf den zeitlichen Verlauf der Vibrationssignale des Pumpenkörpers der Vakuumpumpe (101) aufgezeichnet,
- es werden die Funktionssignale in ein Frequenzspektrum umgewandelt und Frequenzbänder um charakteristische Frequenzen der Kinematik der Vakuumpumpe in dem Spektrum ausgewählt,
- es werden die Assoziationsregeln, die das Verhaltensmodell der Vakuumpumpe beschreiben, durch Extraktion von Wissen aus einer Trainingsdatenbank festgelegt, die mehrere Ereignissequenzen umfasst, die an einem Bestand von Vakuumpumpen und über eine Lebensdauer der Vakuumpumpen, die von der Inbetriebnahme bis zu dem Drehdefekt beim Rotor reicht, erhalten werden,
- es wird eine Übereinstimmung zwischen mindestens einer Ereignisfolge und mindestens einem Vorläufermuster einer vorbestimmten Assoziationsregel eines Verhaltensmodells der Vakuumpumpe in den aufgezeichneten Ereignissequenzen gesucht, wobei die Vorläufermuster von vorbestimmten Assoziationsregeln einen Drehdefekt beim Rotor (102) implizieren, und
- es wird ein Vorhersagezeitfenster abgeleitet, in dessen Verlauf ein Drehdefekt beim Rotor an der Vakuumpumpe (103) eintreten wird,
wobei das Verfahren **dadurch gekennzeichnet ist, dass** die Assoziationsregeln durch Extraktion von Wissen unter der Beschränkung von Extraktionsparametern festgelegt werden, bei denen es sich um die Unterstützung, das Vertrauen und die maximale Dauer zwischen jedem Ereignis der Assoziationsregel handelt, wobei, ausgehend von der Trainingsdatenbank, eine Ereignissequenz einerseits durch die Auswahl aus den Frequenzbändern eines Referenzniveaus und von Zwischenfunktionsniveaus, die einem Mehrfachen des Referenzniveaus entsprechen und für die Funktionsweise der Vakuumpumpe charakteristisch sind, und andererseits durch eine charakteristische Dauer der Niveaus bestimmt wird.

2. Verfahren zur Vorhersage nach Anspruch 1, wobei eine oder mehrere Assoziationsregeln auf N-1 Ereignissequenzen der Trainingsdatenbank, die an N Vakuumpumpen erhoben wurden, extrahiert werden, und diese Assoziationsregeln auf der Ereignissequenz validiert werden, die der Extraktion nicht gedient hat.

3. Pumpvorrichtung, umfassend:
- eine Vakuumpumpe (7), die mindestens einen Rotor und einen Pumpenkörper umfasst, wobei der Rotor geeignet ist, in dem Pumpenkörper durch einen Motor der Pumpe (7) in Drehung versetzt zu werden,
- einen Sensor von Funktionssignalen (9) der Pumpe (7) und
- ein Mittel zur Vorhersage (10) eines Vorhersagezeitfensters, in dessen Verlauf ein Drehdefekt beim Rotor an der Vakuumpumpe (7) eintreten wird, wobei das Mittel zur Vorhersage (10) konfiguriert ist, ein Verfahren zur Vorhersage eines Drehdefektes beim Rotor einer Vakuumpumpe nach einem der Ansprüche 1 bis 2 zu verwenden, um das Vorhersagezeitfenster ausgehend von den Messungen zu berechnen, die von dem Sensor von Funktionssignalen (9) bereitgestellt werden.

4. Pumpvorrichtung nach dem vorhergehenden Anspruch, wobei der Sensor von Funktionssignalen (9) ein Vibrationssensor ist, der an einem Lager des Pumpenkörpers befestigt ist.

## Claims

1. Method for predicting a failure in the rotation of the rotor of a vacuum pump, comprising the following steps:
- sequences of events related to the change over time of functional signals of the vacuum pump are recorded (101),
- sequences of events related to the change over time of vibration signals in the pump body of the vacuum pump are recorded (101),
- the functional signals are transformed into a frequency spectrum, and frequency bands are selected around frequencies characteristic of the kinematics of the vacuum pump within said spectrum,
- association rules are established describing the behaviour model of the vacuum pump by extracting knowledge from a learning database comprising a plurality of sequences of events, obtained from a set of vacuum pumps over a service life of the vacuum pumps ranging from the startup to the failure of the rotation of the rotor,
- a match is sought between at least one succession of events and at least one pre-established association rule precursor pattern of a behaviour model of the vacuum pump within the recorded sequences of events, said pre-established association rule precursor patterns involving a failure in the rotation of the rotor (102), and
- a predictive time window during which a failure in the rotation of the rotor will occur in the vacuum pump is deduced therefrom (103),
- the method being **characterized by** the fact that said association rules are established by extracting knowledge with the restriction of one or more extraction parameters that are the support, the confidence and the maximum duration between each event of the association rule, and, on the basis of the learning database, a determination is made of a sequence of events on the one hand, by selecting from among said frequency bands a reference level and intermediate operating levels, corresponding to a multiple of the reference level, and operating characteristics of the vacuum pump, and on the other hand, via a duration characteristic of said levels.

2. Prediction method according to Claim 1, wherein one or more association rules are extracted from N-1 sequences of events from the learning database, recorded from N vacuum pumps, and said association rules are verified against the sequence of events which was not used for extraction.

3. Pumping device having:
- a vacuum pump (7) comprising at least one rotor and a pump body, said rotor being able to be driven in rotation within said pump body by a motor of said pump (7),
- a functional signal sensor (9) for sensing functional signals of said pump (7), and
- a predicting means (10) for predicting a predictive time window during which a failure in the rotation of the rotor will occur in the vacuum pump (7), said predicting means (10) being configured to implement a method for predicting a failure in the rotation of the rotor of a vacuum pump according to either of Claims 1 and 2 in order to calculate the predictive time window on the basis of measurements provided by said functional signal sensor (9).

4. Pumping device according to the preceding claim, wherein said functional signal sensor (9) is a vibration sensor fixed at a bearing of said pump body.
